(19) Europäisches Patentamt
European Patent Office
Office européen des brevets

(11) **EP 2 180 585 A1**

(12) # EUROPEAN PATENT APPLICATION

(43) Date of publication:
28.04.2010 Bulletin 2010/17

(51) Int Cl.:
*H02M 1/14* (2006.01)    *H02M 1/15* (2006.01)
*H02M 3/335* (2006.01)    *H02M 1/42* (2007.01)

(21) Application number: 08461501.2

(22) Date of filing: 22.10.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: **ADVANCED DIGITAL BROADCAST
S.A.**
**1292 Pregny-Chambesy (CH)**

(72) Inventor: **Wabiszczewicz, Zbigniew**
**65-559, Zielona Gora (PL)**

(74) Representative: **Hudy, Ludwik**
**Kancelaria Patentowa Patelha**
**Czernichow 4**
**32-070 Czernichow,  Krakow (PL)**

(54) **AC-DC converter with a smoothing circuit achieving small current ripples at the converter output**

(57)    An AC-DC converter with a smoothing circuit is provided with an AC power source (301), a rectifier (302), connected to the AC power source (301), a controller (304) for controlling conversion of DC voltage, connected to the rectifier (302) via a positive and a negative pole line L1,L2. The controller (304) has an operating voltage between A1 and D. A source of a DC voltage (308) above A1 is present in the converter. A capacitor (402) is connected across the positive and negative pole of the source of a DC voltage (308). The capacitor (402) feeds the controller (304) via the L1 and L2 lines. The capacitor (402) can only be charged by voltage other than the voltage output by the rectifier (302) and has a capacitance such that only voltage above A1 is supplied to the controller (304).

Fig. 4A

EP 2 180 585 A1

**Description**

The present invention concerns an AC-DC converter with a smoothing circuit.

A typical AC-DC converter includes a power conversion unit, a rectifier, a capacitor low-pass filter, a control unit and a power switch. The power conversion unit includes a transformer and a rectifier.

Varying DC output of the rectifier is suitable for lamps, heaters and standard motors. However, it is not suitable for electronic circuits unless a smoothing circuit is provided, typically situated after the rectifier of the AC-DC converter.

Although ripples, appearing on the output of the rectifier, are only small perturbations when output DC voltage level is high, the ripples become an urgent problem, and drawback, when the output DC voltage level is low. Since a great variety of modern semiconductor devices, such as microprocessors, typically operate at low DC voltage levels, the ripples may interfere with the proper operation of the devices.

One way to minimize output ripples, is by improving filtering capabilities of the AC-DC converter. Smoothing is typically performed by a large value electrolytic capacitor connected across the DC supply to act as a reservoir, supplying current to the output when the varying DC voltage, output by the rectifier, is falling. The large value electrolytic capacitor charges quickly near the peak of the varying DC voltage, and then discharges as it supplies current to the output.

Without a smoothing capacitor, positioned after a rectifier, in a circuit system, the output will be a series of pulses in the range between zero and the maximum voltage of the rectifier. Therefore a typical capacitor used for smoothing shall operate at voltages of up to 400 V.

However it is to be noted, that smoothing significantly increases the average DC voltage to almost the peak value (1.4 × RMS value). For example 6V RMS AC is rectified to full wave DC of about 4.6V RMS (1.4V is lost in the bridge rectifier), with smoothing this increases to almost the peak value giving 1.4 × 4.6 = 6.4V smooth DC.

A drawback of this solution is that the smoothing capacitors of high voltage level are not reliable enough and are typically the weakest link the whole AC-DC converter. The high-voltage capacitors need replacement more often than other parts of the converters.

Moreover, failure of a capacitor may damage other components of the circuit. Additionally, it is necessary to provide means for discharging the smoothing capacitor after power is switched off. This is because the capacitor has a large value of capacitance and will remain charged to high voltage for a period of time after switching the power off.

Another drawback is that the smoothing capacitor occupies a relatively large amount of space within the whole converter circuit.

Prior art solutions have attempted to address this problem. For example, U.S. Pat. No. 5,668,464, teaches an AC-DC converter circuit that incorporates a feedback control circuit that generates an AC ripple signal to cancel out output ripples. Drawbacks of this converter circuit are that the feedback control circuit not only adds complexity to the circuit but also takes up precious space within small semiconductor devices. In addition, the output inductor carries large AC current ripples that can degrade the inductor. Moreover, this solution is cost-ineffective.

In turn, U.S. Pat. No. 5,663,876 describes a rectifier circuit with two output inductors that can produce a DC signal without any output ripples. However, this can only be achieved by using inductors with specific inductance values operating at a predetermined operating condition. In addition, current and voltage ripples across the two output inductors are large and can result in degrading their performance.

Therefore, there is a need for an improved AC-DC converter that produces a DC signal with low DC voltage level, small voltage and current ripples, but without large capacitors and/or inductors, addition of complex circuits, or strict operating requirements.

The primary objective of the present invention is to provide an improved AC-DC converter with a smoothing capability, which obviates the need for a large capacitance, high voltage smoothing capacitor hence providing a more reliable AC-DC converter.

According to the present invention, an AC-DC converter with a smoothing circuit, comprises an AC power source with an AC supply voltage between A and B, a rectifier, connected to the AC power source, the AC-DC converter having a controller, for controlling conversion of DC voltage, connected to the rectifier via a positive pole line L1 and a negative pole line L2, the controller has an operating voltage between A1 and D and a source of a DC voltage above A1 is present in the converter whereas a capacitor is connected, such that a negative pole of the capacitor is connected to a negative pole of the source of a DC voltage and a positive pole of the capacitor is connected to a positive pole output of the source of a DC voltage wherein the capacitor is connected such that it feeds the controller via the L1 and L2 lines, whereas the connection is such that the capacitor can only be charged by voltage other than the voltage output by the rectifier and wherein the capacitor has a capacitance such that only voltage above A1 is supplied to the controller.

Preferably A1 is below 50 volts and/or B is above 300 volts and/or A is below -300 volts and/or D equals or is above B. It is also favorable that capacitance of the capacitor measured in microfarad [μF] is defined by an equation

$$C_{402} = \frac{2}{\Pi} * \left( \frac{P_{out} * \arcsin\left(\frac{U_{514}}{Amp}\right)}{\frac{P_{out}}{P_{in.}} * (U_{503} - U_{514})^2 * f} \right) * 10^{-6}$$

where

$U_{503}$ is a voltage (given in volt [V]) provided by the capacitor,

Amp is an amplitude of a voltage output by the rectifier,

$U_{514}$ is a minimum operating voltage (given in [V]) of the controller,

Pin is an input power (given in watt [W]) of the AC-DC converter,

Pout is an output power (given in [W]) of the AC-DC converter,

f is frequency (given in hertz [Hz]) of input voltage.

It is advantageous when the rectifier is a half or full wave rectifier.

Preferably, the connection, allowing the capacitor to be charged only by voltage other than the voltage output by the main rectifier, is achieved by means of a diode or a transistor connected serially to the capacitor.

It is favorable that the controller is supplied with power from a rectifier other than the main rectifier.

Optionally the source of a DC voltage is a rectifier wherein the input of the rectifier is connected to an output of a transformer whereas the input of the transformer is connected to an output of the controller.

Other objects, advantages and novel features of the invention will become more apparent from the following detailed description of exemplary embodiments, when taken in conjunction with the accompanying drawings, in which:

Fig. 1 shows a prior-art rectifier with smoothing;

Fig. 2A shows a rectified voltage;

Fig. 2B shows a rectified voltage with a high-voltage capacitor in the circuit;

Fig. 3 shows a prior-art AC-DC converter with a control unit;

Fig. 4A shows a first embodiment of an AC-DC converter according to the present invention;

Fig. 4B shows a second embodiment of the AC-DC converter according to the present invention;

Fig. 4C shows a third embodiment of the AC-DC converter according to the present invention;

Fig. 4D shows a fourth embodiment of the AC-DC converter according to the present invention;

Fig. 4E shows a fifth embodiment of the AC-DC converter according to the present invention;

Fig. 5A shows a waveform of two voltages; and

Fig. 5B shows a waveform of a smoothed voltage using the circuit according to the present invention.

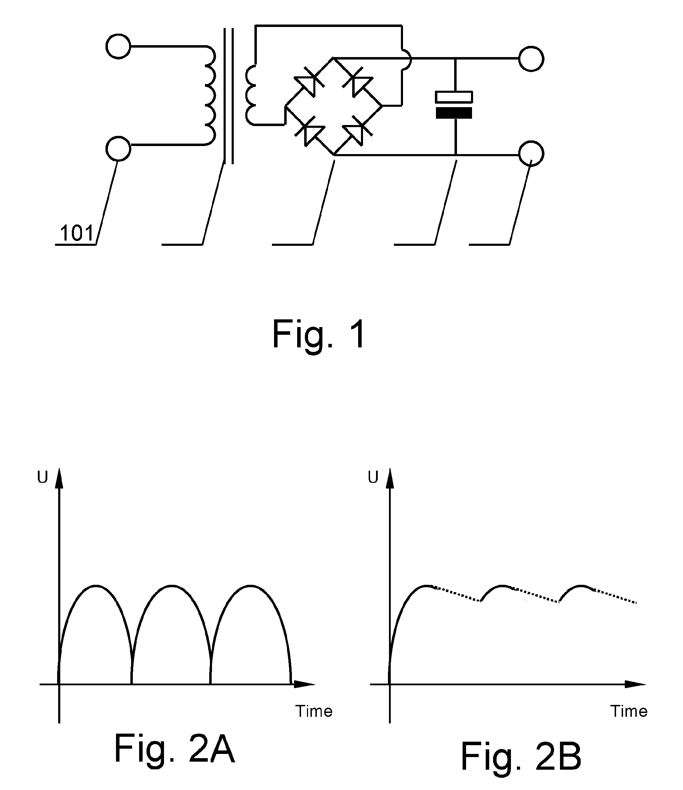

Fig. 1 shows a prior-art converter comprising a rectifier followed by a smoothing circuit. AC mains 101 provide input voltage for the converter circuit. Next, a transformer 102 is typically used to reduce voltage, a step down transformer. Next, a rectifier 103 is used to filter/output only positive voltage or current. Typically a bridge rectifier is used for this purpose. The full wave rectifier outputs a full-wave varying DC that comprises ripples. The last element is a smoothing circuit, for example a high-voltage capacitor 104. The smoothing circuit may also be called a low-pass filter LPF. It is used to minimize the ripples present in the output of the rectifier 103. The output voltage 105 is smoothed with only small ripples present. Each converter can also be characterised by input power Pin and output power Pout, both given in watt [W].

Fig. 2A presents a rectified voltage. Such a waveform is output by the rectifier 103, when no smoothing circuit is present.

Fig. 2B depicts a rectified voltage with a high-voltage capacitor in the circuit. Such a waveform is output by the smoothing circuit 104. The ripples shown in Fig. 2A are smoothed while the high-voltage capacitor discharges.

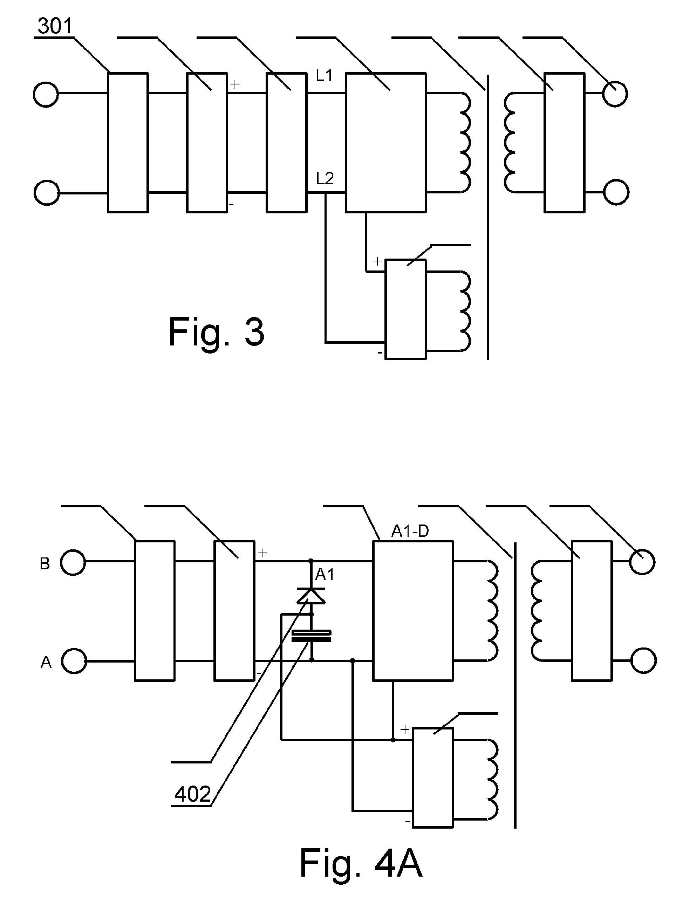

Fig. 3 depicts a prior-art AC-DC converter with a control unit. The input voltage 301, having values between A and B, is rectified by a first rectifier 302 and smoothed by a smoothing circuit 303.

In the following embodiment all voltages are given in relation to an input AC voltage of average 230 volts.

The control unit and power switch circuit, in short controller 304, is responsible for conversion of the DC voltage to high frequency voltage. The advantage of the controller 304 is that it has wide operating voltage range. The controller 304 typically operates properly if the range of voltage A1 - D is higher than the minimum input voltage, for example A1 typically is in the range of 15-30 volts. However other controllers 304 may have A1 at 10 or 50 volts. Nevertheless for the purpose of the invention a minimum operating voltage of below 50 volts is preferable. An example of a control unit and power switch circuit having a wide operating voltage range may be an IA2310 integrated circuit.

The maximum operating voltage D, has to be selected with relation to the input voltage 301. Additionally the controller 304 may require a power source having a voltage of about its minimum operating voltage, defined as having a value above the A1 value. However, different values may be used, which are at least several times lower that the top input AC voltage. For example the control unit and power switch circuit 304 operating voltage range is 20 to 400 volts and requires a rectified power source of 25 volts to operate.

The next element is a transformer 305 used for transformation of the high frequency voltage to required output voltage. The voltage output by the transformer 305 is directed to a second rectifier 306 to obtain rectified output voltage 307. Additionally, the voltage output by the transformer 305 is also directed to the third rectifier 308, which outputs voltage used to power the control unit and power switch circuit 304.

Fig. 4A shows a first embodiment of an AC-DC converter according to the present invention. Most of the elements are common with the converter known from prior art and shown in Fig. 3. The smoothing circuit 303 was however removed.

In order to compensate for this removal, a solution was required that would achieve a similar result, required by the control unit and power switch circuit 304, and at the same obviate the need for a high-voltage capacitor, which proved to be the weakest link of the entire AC-DC converter.

In order to compensate for this change, a capacitor 402 - diode 401 serial circuit is introduced which is connected to the positive pole line L1 and the negative pole line L2. According to Fig. 4A the negative pole of the capacitor of the capacitor 402 - diode 401 serial circuit is connected to the negative pole of the rectifier 302. The positive pole of the capacitor is connected to the diode 401. The output of the diode is connected to the positive pole of the rectifier 302. Additionally the positive pole of the rectifier 308 is connected to a connection point between the capacitor 402 and the diode 401.

The purpose of the diode 401 is preventing the capacitor 402 from being loaded by the current output by the rectifier 302 that means that the capacitor 402 can only be charged by voltage other than the voltage output by the rectifier 302. The diode may be replaced by a transistor being controlled such that the same prevention effect is achieved.

Both diodes and transistors are semiconductors, therefore the serial circuit can be defined as a capacitor 402 - semiconductor 401 circuit.

In case of a diode, the diode has to be selected such that it will block the rectified A-B alternating current. In case of a typical input AC voltage between -325 to 325 volts a 1 N4005 - 1 N4007 diode will suffice.

For all embodiments of the invention, the capacitor is a low voltage capacitor, utilizing the low voltage that drives the control unit and power switch circuit 304. The voltage of the capacitor 402 has to be above the minimum operating voltage of the control unit and power switch circuit 304. Typically the maximum voltage on the capacitor 402 will be several times lower than the typical maximum voltage on the high-voltage capacitor of the smoothing circuit 303.

In terms of the aforementioned A - D values, in the embodiment of Fig. 4A they take the values of: A=-325, B=325, A1=20 and D=325 volts.

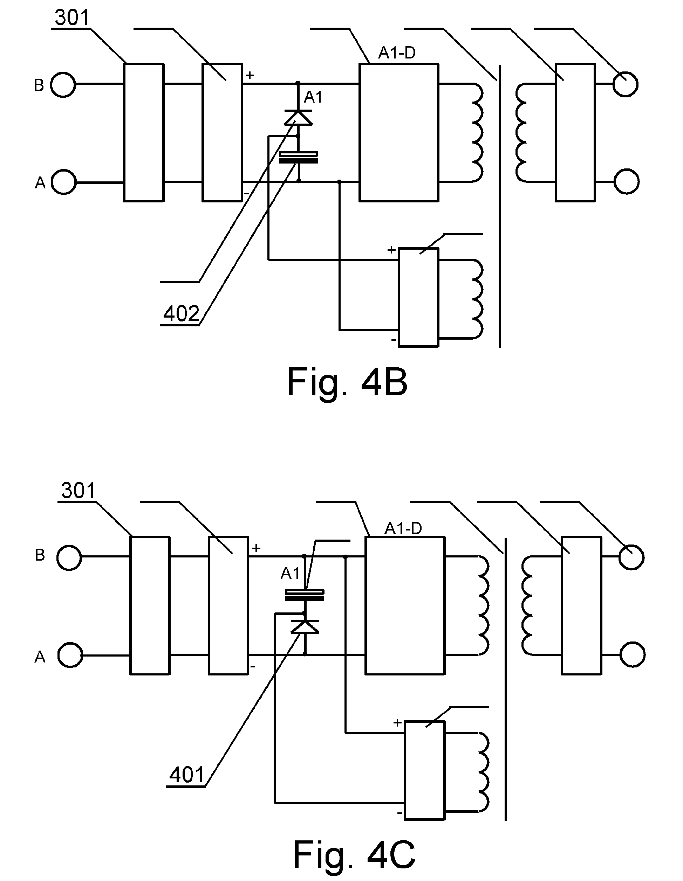

Fig. 4B shows a second embodiment of the AC-DC converter according to the present invention. It differs from the first embodiment in that the rectifier 308 operates only as a power supply for the capacitor 402. The fact whether the control unit and power switch circuit 304 requires additional power source is irrelevant in this case. With reference to exemplary voltage values, they remain the same with one difference that the voltage, output by the rectifier 308, is not to be treated as a required power source for the control unit and power switch circuit 304.

Fig. 4C shows a third embodiment of the AC-DC converter according to the present invention. The negative pole of the capacitor 402 of the capacitor 402 - diode 401 serial circuit is connected to the output of the diode 401. The positive pole of the capacitor is connected to the positive pole between the rectifier 302 and the control unit and power switch circuit 304.

Additionally, the negative pole of the rectifier 308 is connected between the capacitor 402 and the diode 401. The input of the diode 401 is connected to the negative pole of the rectifier 302. The positive pole of the rectifier 308 is connected, to the positive pole between the rectifier 302 and the control unit and power switch circuit 304. In this embodiment the rectifier 308 may be a power supply for the control unit and power switch circuit 304, as shown in Fig. 4A, or be a separate rectifier as shown in Fig. 4B.

All the presented exemplary embodiments 4A, 4B and 4C can be **characterised in that** the capacitor 402 is connected, within the shown circuits, such that it feeds the controller 304 via its input lines, whereas the connection is such that the capacitor 402 can be charged by the rectifier 308 and in that the capacitor 402 has a capacitance such that only voltage above A1 is supplied to the controller 304. As discussed previously, the capacitor 402 is not charged by the current output by the rectifier 302.

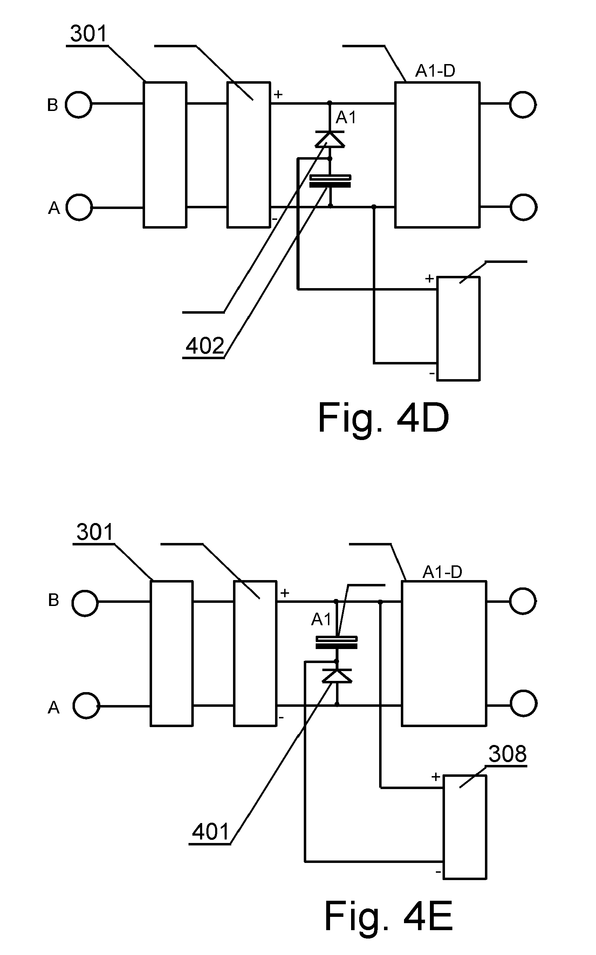

Fig. 4D corresponds to the embodiment shown in Fig. 4B. However the difference between the embodiments lies in that the 308 circuit, presented in Fig. 4D, is an independent source of a DC voltage. The 308 circuit in this embodiment may be a battery or any other DC voltage source, for example output by a power supply, which may be another AC-DC converter.

Fig. 4E corresponds to the embodiment shown in Fig. 4C. However the difference between the embodiments lies in that the 308 circuit, presented in Fig. 4E, is an independent source of a DC voltage. The 308 circuit in this embodiment may be a battery or any other DC voltage source, for example output by a power supply, which may be another AC-DC converter.

The source of a DC voltage, 308 presented in Fig. 4D and Fig. 4E supplies voltage above A1.

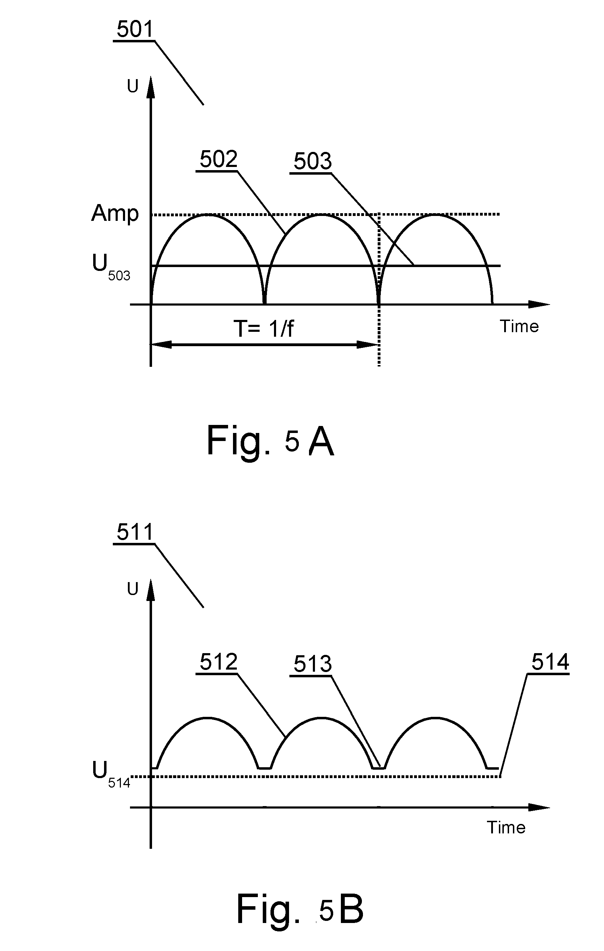

Fig. 5A presents a waveform 501 of two voltages. The first voltage is the rectified, by the recitifier 302, input voltage 502 and the second voltage $U_{503}$ 503 is the voltage provided via the capacitor 402 shown in Fig. 4. The amplitude of the rectified voltage, output by the rectifier 302, has been marked with 'Amp' symbol while the frequency of the input AC voltage, given in [Hz], has been marked with an 'f' symbol.

Fig. 5B presents a waveform 511 of a smoothed voltage using the circuit according to the present invention. Some varying rectified voltage remains 512 while the lower parts of the wave are compensated 513 with the voltage from the capacitor 402. Hence, the minimum voltage does not lower to the minimum operating voltage $U_{514}$ 514 of the control unit and power switch circuit 304.

The capacitance of the capacitor 402 can be defined as:

$$C_{402} = \frac{2}{\Pi} * \left( \frac{P_{out} * \arcsin\left(\frac{U_{514}}{Amp}\right)}{\frac{P_{out}}{P_{in}} * (U_{503} - U_{514})^2 * f} \right) * 10^{-6}$$

where the input power Pin and output power Pout have been described with reference to Fig. 1 and Amp has been defined with reference to Fig. 5A and the capacitance $C_{402}$ is measured in $\mu$F.

Depending on needs of a particular converter and embodiment chosen, the capacitance may also be defined using the above equation, which would additionally take into account the fact that the capacitor 402 also charges itself, via the 308 rectifier, while charging the control unit and power switch circuit 304.

This embodiment stays in line with the definition that the purpose of the diode 401 is preventing the capacitor 402 from being loaded by the current output by the rectifier 302 that means that the capacitor 402 can only be charged by voltage other than the voltage output by the rectifier 302. The diode may be replaced by a transistor being controlled such that the same prevention effect is achieved.

The converter disclosed herein finds its industrial application in systems where reliability is a key factor. Consumer electronics devices may be one of examples.

It is to be understood, however, that even though numerous characteristics and advantages of the present invention have been set forth in the foregoing description, together with details of the structure and function of the invention, the disclosure is illustrative only, and changes may be made in detail, especially in matters of voltage parameters and arrangement of parts within the principles of the invention to the full extent indicated by the broad general meaning of the terms in which the appended claims are expressed.

**Claims**

1. An AC-DC converter with a smoothing circuit, the AC-DC converter comprising

   • an AC power source (301) with an AC supply voltage between A and B;
   • a rectifier (302), connected to the AC power source (301);
   • a controller (304), for controlling conversion of DC voltage, connected to the rectifier (302) via a positive pole line L1 and a negative pole line L2

   the converter being **characterized in that**

   • the controller (304) has an operating voltage between A1 and D;

• a source of a DC voltage (308) above A1; and
• a capacitor (402) is connected, such that a negative pole of the capacitor (402) is connected to a negative pole of the source of a DC voltage (308) and a positive pole of the capacitor (402) is connected to a positive pole output of the source of a DC voltage (308);
• wherein the capacitor (402) is connected such that it feeds the controller (304) via the L1 and L2 lines, whereas the connection is such that the capacitor (402) can only be charged by voltage other than the voltage output by the rectifier (302); and
• wherein the capacitor (402) has a capacitance such that only voltage above A1 is supplied to the controller (304).

2. The AC-DC converter according to claim 1, **characterized in that** A1 is below 50 volts.

3. The AC-DC converter according to claim 1, **characterized in that** B is above 300 volts.

4. The AC-DC converter according to claim 1, **characterized in that** A is below -300 volts.

5. The AC-DC converter according to claim 1, **characterized in that** D equals or is above B.

6. The AC-DC converter according to claim 1, **characterized in that** the capacitance of the capacitor (402) measured in $\mu$F is defined by an equation

$$C_{402} = \frac{2}{\Pi} * \left( \frac{P_{out} * \arcsin\left(\frac{U_{514}}{Amp}\right)}{\frac{P_{out}}{P_{in}} * (U_{503} - U_{514})^2 * f} \right) * 10^{-6}$$

where
$U_{503}$ is a voltage provided by the capacitor,
Amp is an amplitude of a voltage output by the rectifier (302),
$U_{514}$ is a minimum operating voltage of the controller (304),
Pin is an input power of the AC-DC converter,
Pout is an output power of the AC-DC converter,
f is frequency of input voltage.

7. The AC-DC converter according to claim 1, **characterized in that** the rectifier (302) is a half or full wave rectifier.

8. The AC-DC converter according to claim 1, **characterized in that** connection, allowing the capacitor (402) to be charged only by voltage other than the voltage output by the rectifier (302), is achieved by means of a diode (401) connected serially to the capacitor (402).

9. The AC-DC converter according to claim 1, **characterized in that** connection, allowing the capacitor (402) to be charged only by voltage other than the voltage output by the rectifier (302), is achieved by means of a transistor connected serially to the capacitor (402).

10. The AC-DC converter according to claim 1, **characterized in that** the controller (304) is supplied with power from a rectifier (308).

11. The AC-DC converter according to claim 1, **characterized in that** the source of a DC voltage is a rectifier wherein the input of the rectifier is connected to an output of a transformer (305) whereas the input of the transformer (305) is connected to an output of the controller (304).

Fig. 1

Fig. 2A

Fig. 2B

## Fig. 3

301

L1

L2

## Fig. 4A

B

A

A1-D

A1

402

Fig. 4B

Fig. 4C

301

A1-D

B

A1

402

A

Fig. 4D

301

A1-D

B

A1

A

308

401

Fig. 4E

**Fig. 5 A**

**Fig. 5 B**

Europäisches
Patentamt

European
Patent Office

Office européen
des brevets

**EUROPEAN SEARCH REPORT**

Application Number

EP 08 46 1501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 740 628 A (SGS THOMSON MICROELECTRONICS [FR]) 30 April 1997 (1997-04-30) * figures 1-3 * * page 1, line 12 * * page 5, line 33 - page 6, line 1 * | 1-5,7,8, 10,11 | INV. H02M1/14 H02M1/15 H02M3/335 H02M1/42 |
| A | | 6 | |
| Y | | 9 | |
| Y | US 3 519 853 A (FEUELL EDWARD ALBERT) 7 July 1970 (1970-07-07) * figures 1,6 * * column 3, lines 30-40 * | 9 | |
| A | US 4 555 753 A (TAKAHASHI MAKOTO [JP]) 26 November 1985 (1985-11-26) * figures 6-10 * | 1-11 | |
| A | US 2003/107332 A1 (NEWMAN ROBERT C [US] ET AL NEWMAN JR ROBERT C [US] ET AL) 12 June 2003 (2003-06-12) * figures 4,5 * | 1-11 | |
| A | WO 2006/015931 A (SIEMENS AG [DE]; BRUCKMANN MANFRED [DE]; SCHIERLING HUBERT [DE]) 16 February 2006 (2006-02-16) * figures 2,3 * * page 3, lines 17-26 * | 1-11 | TECHNICAL FIELDS SEARCHED (IPC) H02M |

The present search report has been drawn up for all claims

| Place of search | Date of completion of the search | Examiner |
|---|---|---|
| Munich | 2 April 2009 | Zettler, Karl-Rudolf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 46 1501

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2009

| Patent document cited in search report | | Publication date | Patent family member(s) | | Publication date |
|---|---|---|---|---|---|
| FR 2740628 | A | 30-04-1997 | NONE | | |
| US 3519853 | A | 07-07-1970 | FR | 1510775 A | 19-01-1968 |
| US 4555753 | A | 26-11-1985 | JP | 1706124 C | 27-10-1992 |
| | | | JP | 3072198 B | 15-11-1991 |
| | | | JP | 59081899 A | 11-05-1984 |
| US 2003107332 | A1 | 12-06-2003 | NONE | | |
| WO 2006015931 | A | 16-02-2006 | CN | 1985429 A | 20-06-2007 |
| | | | DE | 102004035799 A1 | 16-03-2006 |
| | | | EP | 1771935 A2 | 11-04-2007 |
| | | | US | 2007177407 A1 | 02-08-2007 |

EPO FORM P0459

For more details about this annex : see Official Journal of the European Patent Office, No. 12/82

**EP 2 180 585 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5668464 A
- US 5663876 A